# EUROPEAN PATENT APPLICATION

(11) **EP 4 818 039 A1**
(43) Date of publication of application: **07.10.2026**
(21) Application number: 26166821.4
(22) Date of filing: 23.03.2026
(51) Int. Cl.: B64C 3/56

(54) **FOLDING WING ARRANGEMENT WITH LATCH ASSEMBLY**

(30) Priority: 31.03.2025 GB 202504723
(71) Applicant: Airbus Operations Limited, Bristol BS34 7PA (GB); Airbus Operations GmbH, 21129 Hamburg (DE)
(72) Inventor: SPITZER, Frank, Bristol, BS34 7PA (GB); HAND, Matthew, Bristol, BS34 7PA (GB); MORRELL, Paul, Bristol, BS34 7PA (GB); HIPKISS, Richard James, Bristol, BS34 7PA (GB); CLARK, Timothy, Bristol, BS34 7PA (GB); AGMEN, Keith, Bristol, BS34 7PA (GB); RUIZ DE PABLO, Javier, Bristol, BS34 7PA (GB); WINKELMANN, Christoph, 21129 Hamburg (DE); PALMER, Scott, Bristol, BS34 7PA (GB)
(74) Representative: Abel & Imray LLP

(57) **Abstract**

An aircraft wing, comprising: a fixed wing 12 an outboard wing section 14; and a hinge assembly 52 connecting the outboard wing section to the fixed wing. The wing is configurable between a flight configuration and a ground configuration. The hinge assembly 52 comprises: a fore set of interleaving lugs 58 and an aft set of interleaving lugs 58; an actuator, such as a Geared Rotary Actuator (GRA) 66, located between the fore set of lugs and the aft set of lugs. The wing also comprises: a latch assembly 68, located in the fixed wing and inboard of the actuator 66; a fore latching arm 74 and an aft latching arm 76. The latch assembly 68 comprises an aft latch pin 72, deployable in the aft direction to latch the aft latching arm 76, and a fore latch pin 74, deployable in a forward direction, to latch the fore latching arm 74.

## Description

### BACKGROUND OF THE INVENTION

The present invention concerns wing folding arrangements. More particularly, but not exclusively, this invention concerns an aircraft wing comprising a rotatable outboard wing section and a latch assembly.

It is increasingly desirable to have larger wing spans across all sizes of passenger aircraft as a means to improve fuel efficiency. Particularly for larger aircraft, however, the maximum aircraft span is effectively limited by airport operating rules which govern various clearances required when manoeuvring around the airport (such as the span and/or ground clearance required for gate entry and safe taxiway usage).

Therefore, folding wing tip devices have been introduced into passenger aircraft, where a wing tip device is movable between a flight configuration for use during flight, and a ground configuration for use during ground-based operations. In the ground configuration, the wing tip device is moved away from the flight configuration such that the span of the aircraft wing is reduced, thereby allowing use of existing gates and safe taxiway usage. In such arrangements the moveable end of the wing may sometimes be referred to as a 'folding wing tip' or 'folding wing tip device'. However, it will be appreciated that such a term may also encompass a range of sizes, and where the hinge is relatively far inboard this may equally be considered an 'outboard wing section', a 'folding wing' or a 'movable wing'. For the purposes of the present disclosure these terms are used interchangeably.

In general terms, folding wing arrangements typically comprise: a mechanical joint about which the outboard wing section moves, an actuation system for effecting the movement, and a latching system for latching the outboard wing section in the flight configuration. Some examples of these features are described below.

There are a number of mechanical joint designs for enabling rotation of a folding wing tip about an axis of rotation. The provision of interleaving lugs to form a hinge for a folding wing tip is known. Examples of such arrangements are shown in, for example, EP3560819 (Airbus Operations Limited) and US2019/0359311 (Airbus Operations GmbH). US 2020/0346740 (Boeing) and EP3360779 (Boeing) disclose a different type of joint. US 2020/0346740 discloses a folding wing pivotably coupled to a fixed wing about a hinge interface. The hinge interface comprises a pair of torque boxes through which the hinge pins pass. Each torque box has a length that is greater than its width.

Some actuation systems for folding wing tips include an actuation unit in the form of a Geared Rotary Actuator (GRA). GRAs can be used to control the rotation of the outer wing section between the flight and ground configurations. In this context, the GRA typically includes a gearing arrangement which transmits the rotation of an input member to an output member that is fixed to the outer wing section. GRAs have been found to be especially useful in the context of folding wing tip arrangements. Examples of a folding wing tip actuation system comprising a GRA are disclosed in, for example, WO2019/034432 (Airbus Operations GmbH) and WO2020/229630 (Airbus Operations Limited).

A number of designs of latching system have been proposed for folding wing tips. A latching system is often required in order to latch the outer wing section to the fixed wing section, thereby holding the wing in the flight configuration. A latching system may, in some instances, also be referred to as a locking system for locking the wing in the flight configuration. A first example of a latching system is shown in EP3560819 referred to above. In EP3560819, the fixed wing and the wing tip device comprise a series of interleaving hinge lugs and latching lugs. A hinge axis passes through the hinge lugs above mid-thickness of the wing. The latching lugs are located below the hinge lugs and along the lower-most part of the junction between the wing and wing tip device. This may be beneficial from the structural perspective (for example it may provide effective load transfer across the joint). The latching system is arranged such that when the wing tip device is in the flight configuration, locking pins are inserted through aligned holes in the latching lugs, thereby locking the wing in this configuration. A second example of a latching system is shown in EP3360779, also referred to above. EP3360779 discloses a latch system comprising a plurality of latch pins, the latch pins being deployable from either side of, and into, shear plates and/or the torque boxes on the folding wing.

There tends to be limited space in the wing, particularly near the tip. There is also a trend towards designing and manufacturing aircraft wings with higher aspect ratios, which further constrains space in or near the tip. There are therefore various challenges in providing suitable joints, actuation systems and/or latching systems for folding wings, within this space-constrained environment. There may also be challenges in providing folding wing arrangements that address structural considerations (for example to provide effective load transfer across a joint) whilst also being a suitable size and/or layout to fit within the limited space available. A drawback of some known designs is that it may, for example, be necessary for some parts of the folding wing arrangement to protrude from the optimal outer mold line (OML) of the wing. The OML may need to be modified and/or a suitable fairing may be required to cover the protruding components. This tends to be undesirable from an aerodynamics perspective.

Aspects of the present invention seek to mitigate one or more of the above-mentioned problems. Alternatively or additionally, the present invention seeks to provide an improved wing folding arrangement.

### SUMMARY OF THE INVENTION

According to a first aspect of the invention, there is provided an aircraft wing, comprising: a fixed wing; an outboard wing section outboard of the fixed wing; and a hinge assembly connecting the outboard wing section to the fixed wing. The aircraft wing is configurable between: a flight configuration for use during flight and a ground configuration for use during ground-based operations, in which ground configuration the outboard wing section is rotated away from the flight configuration about a hinge axis of the hinge assembly, such that the span of the aircraft wing is reduced. The hinge assembly may comprise: a fore set of interleaving lugs and an aft set of interleaving lugs; a fore hinge pin and an aft hinge pin, extending through the fore and aft sets of interleaving lugs respectively, thereby forming a hinge; and an actuator located between the fore set of lugs and the aft set of lugs, the actuator being configured to rotate the outboard wing section about the hinge axis to move the wing between the flight configuration and the ground configuration. The wing further comprises: a latch assembly, located in the fixed wing and inboard of the actuator; a fore latching arm associated with the outboard wing section; and an aft latching arm associated with the outboard wing section. The latch assembly and the fore and aft latching arms may be configured such that when the wing is in the flight configuration, the fore latching arm extends fore of the latch assembly and the aft latching arm extends aft of the latch assembly such that the latch assembly is between the latching arms. The latch assembly may comprise an aft latch pin, deployable in the aft direction to latch the aft latching arm, and a fore latch pin, deployable in a forward direction, to latch the fore latching arm, such that when the wing is in the flight configuration and the fore and aft latch pins are deployed, the outboard wing section is latched to the fixed wing.

Providing a wing with the combination of features in the first aspect of the invention has been found to be especially beneficial. In particular, the combination of the structure of the hinge and the layout of the hinge, the actuator , the latch assembly and the latching arms may enable a space-efficient arrangement whilst also enabling effective load transfer between the outboard wing section and the fixed wing. The arrangement may also be suitable for scaling to different sizes such that it can be used on a number of differently sized wings (such as wings for narrow body and wide-body aircraft).

Unless otherwise specified, the terms 'fore' and 'aft' are used herein to specify relative locations, along a direction parallel to the hinge axis. Unless otherwise specified, there terms 'inboard' and 'outboard' are used herein to specify relative locations, along a direction perpendicular to the hinge axis.

In some embodiments, the hinge axis may be toed in or out. In preferred embodiments, the hinge axis may be orientated substantially in a line-of-flight direction. In such embodiments the terms fore/aft and inboard/outboard are also commensurate with the relative locations, in the line-of-flight direction and the spanwise direction respectively.

The, or each, set of interleaving lugs may comprise a lug associated with the fixed wing or the outboard wing section, received in a clevis associated with the other of the fixed wing or the outboard wing section. The fixed wing may comprise a fore set of lugs and an aft set of lugs, through which the hinge axis extends. The outboard wing section may comprise a fore set of lugs, interleaving with the fore set of lugs of the fixed wing to form the fore set of interleaving lugs. The outboard wing section may comprise an aft set of lugs, interleaving with the aft set of lugs of the fixed wing to form the aft set of interleaving lugs. Each set of interleaving lugs may comprise a series of aligned holes through which the respective hinge pin is received. The hinge pins may link the fixed wing and the outboard wing section, to facilitate rotational movement of the outboard wing section about the hinge axis.

The latch assembly comprises an aft latch pin, deployable in the aft direction to latch the aft latching arm, and a fore latch pin, deployable in a forward direction, to latch the fore latching arm. Aspects of the present invention recognise that locating a latch assembly between fore and aft latching arms may be especially space-efficient. For example, latch pins may then be deployed in opposing fore and aft directions enabling the latch assembly to be located towards the centre (mid-chord) of the wing.

Alternatively or additionally, embodiments of the invention may enable the use of only two latch pins to latch the outboard wing section, thereby facilitating a relatively low part count. The latch assembly may comprise only one aft latch pin. The latch assembly may comprise only one fore latch pin. It may be that the wing does not comprise a latch pin located fore of the fore set of interleaving lugs. It may be that the wing does not comprise a latch pin located aft of the aft set of interleaving lugs. Such an arrangement avoids the need to house these components in the tight confines of the leading and trailing edges of the wing.

The latch assembly may be operable to deploy the latch pins from a retracted state (in which movement of the wing between the flight and ground configurations is permitted) and a deployed state (in which the latch pins inhibit movement of the wing between the flight and ground configurations). The latch pins may be deployed in opposing directions (fore/aft), but may both be orientated parallel to the hinge axis. In some embodiments the fore and aft latch pins may be arranged parallel to one another but axially offset from one another. This may be required where there is insufficient space to accommodate the combined length of both pins between the latching arms. In some embodiments (for example where the spacing between the arms is sufficient), the fore and aft latch pins may be coaxial.

The latch assembly may be in the form of a latching unit. The latching unit may comprise a housing and the two latch pins. When the latch pins are in a retracted state the latch pins may be located substantially within the housing. When the latch pins are in an extended state, the latch pins may protrude from the housing. The latch pins may be deployable between the retracted and the extended states. Providing the latch assembly as a latching unit may be beneficial to keep a low part-count and/or to facilitate easy fitting/removal of the latch assembly into/from the wing.

The latch assembly may comprise a locking mechanism for locking the latch pins in the extended state.

The fixed wing may comprise a plurality of aft latching arms. The fixed wing may comprise a plurality of fore latching arms.

In principle each latch pin may be deployable to be received in a latching arm only. More preferably, each latch pin is deployable to be received in both a latching arm (associated with the outboard wing section) and a latch pin receiver (associated with the fixed wing).

The fixed wing may comprise a fore latch pin receiver (and more preferably a plurality of fore latch pin receivers). The fixed wing may comprise an aft latch pin receiver (and more preferably a plurality of aft latch pin receivers). The latch pin receivers may be arranged such that when the wing is in the flight configuration the fore latch pin receiver(s) are adjacent (and more preferably interleave with) the fore latching arm(s), and the aft latch pin receiver(s) are adjacent (and more preferably interleave with) the aft latching arm(s). This may enable the aft latch pin to be deployed through aligned holes in all of the aft latching arm(s) and aft latch receiver(s), and the fore latch pin to be deployed through aligned holes in all of the fore latching arm(s) and aft latch receiver(s). Such an arrangement has been found to be beneficial, as any shear loads across the latch pin may be relatively evenly distributed. Furthermore, such an arrangement tends to allow the latching function to be maintained in the unlikely event of a failure of a latch pin. For example, should the latch pin fail at one location along the pin between a latching arm and an adjacent receiver, the pin will nonetheless extend through another latching arm and adjacent receiver and it will therefore still provide the latching function.

At least one of the aft latch pin receivers may be an extension of the aft set of lugs on the fixed wing. At least one fore latch pin receiver may be an extension of the fore set of lugs on the fixed wing.

The aft latching arm may be an extension of one of the lugs in the aft set of lugs of the outboard wing section. The fore latching arm may be an extension of one of the lugs in the fore set of lugs of the outboard wing section.

Embodiments in which the latch pin receivers and/or the latching arms are extensions of respective lugs, have been found to enable a compact arrangement and/or enable effective load transfer.

The latching arms may extend in a direction perpendicular to the hinge axis. The latch pin receivers may extend in a direction perpendicular to the hinge axis.

The latch assembly is located inboard of the hinge axis. The latch pins may be moveable along a latch line. The latch line may be parallel to the hinge axis. The latch line may be offset inboard of the hinge axis. The latch line may be located at least 100mm inboard, more preferably at least 150mm inboard, and more preferably at least 250mm inboard, of the hinge axis.

The fixed wing may comprise a tip with a first structural fitting fixedly connected thereto. The outboard wing section may comprise a root with a second structural fitting connected thereto. The first structural fitting may comprise the fore and aft sets of lugs of the fixed wing. The second structural fitting may comprise the fore and aft sets of lugs of the outboard wing section. By providing first and second structural fittings, embodiments of the invention may be provided without necessarily requiring substantial modification to the structural components at the tip/root of the fixed wing/outboard wing section. For example, the structural fittings may be fixable to conventional wing structures in the fixed wing/outboard wing section, such as spars and ribs.

The first structural fitting may comprise a recess configured to receive the latch assembly. The length of the recess may be less than the distance between the fore and aft latching arms. In embodiments in which the fixed wing comprises latch receivers, the latch receivers may be formed in the first structural fitting. The recess is preferably located between the fore and aft sets of lugs. The recess is preferably located between the fore and aft latch receivers. Providing a recess for the latch assembly may facilitate the correct location and fitting of the latch assembly.

The recess may be located outboard of the tip rib of the fixed wing. The latch assembly may therefore be accessible without necessarily requiring removal of the covers on the fixed wing.

The actuator may be attached between the first structural fitting and the second structural fitting. The attachment may be such that rotation of the actuator rotates the second structural fitting, relative to the first structural fitting. The actuator is attached between the fore sets of lugs and the aft sets of lugs.

In preferred embodiments of the invention, the actuator and the hinge axis are coaxial. The actuator may comprise a rotational axis about which an output member rotates. The rotational axis of the actuator is preferably coaxial with the hinge axis. The concentricity of the axis of rotation of the actuator and the hinge axis may advantageously facilitate a solution in which no clevis, strut, or intermediate bracket is required to attach the actuator to the outboard wing section. This reduces the structures required to cause rotation of the outboard wing section using the actuator , thereby reducing the space required for the folding wing.

The actuator may be driven by a remote motive force (for example the actuator may be driven by a remote motor, via a transmission). The actuator may be a rotary actuator. The actuator may be a geared rotary actuator (GRA). The use of a GRA has been found to be especially beneficial in the context of this arrangement as it is especially space-efficient and tends to be a good fit between the sets of interleaving lugs.

The actuator is located between the fore and aft sets of interleaving lugs. Accordingly, the actuator may be located at a first axial position along the hinge axis, with the fore set of interleaving lugs being located fore of the first location and the aft set of interleaving lugs being located aft of the first location. The latch assembly is located inboard of the actuator. The latch assembly is preferably inboard of the actuator but at the same first axial position along the hinge axis. For example, the actuator and the latch assembly may be centred at a common first axial position along the hinge axis.

The actuator may have a length, measured in a direction along the hinge axis. The latch assembly may have a length measured in a direction along the hinge axis. The magnitude of the length of the actuator and the magnitude of the length of the latch assembly may each be less than the distance (i.e. the spacing in a direction along the hinge axis) between the fore and art latching arms. The actuator may have a length that is less than the combined length of the latch pins.

The fixed wing may comprise a motor (for example an electric or hydraulic motor) configured to drive the actuator (for example the GRA). The motor may be located inboard of the actuator. The motor may be located inboard of the latch assembly. Such an arrangement may be space efficient because it enables the motor to be located in a relatively voluminous part of the wing. The motor may be arranged in a dry bay in the fixed wing. In embodiments comprising a first structural fitting, the motor may be inboard of the first structural fitting.

The motor is preferably coupled to the actuator via an actuator transmission, to transfer a rotary output of the motor into the actuator. The actuator transmission may extend between the sets of interleaving lugs. The actuator transmission preferably does not extend fore of the fore set of interleaving lugs. The actuator transmission preferably does not extend aft of the aft set of interleaving lugs. The motor may also be coupled to the latch assembly, via a latch assembly transmission, to transfer a rotary output of the motor into the latch assembly. The aircraft wing may comprise a power control unit comprising the motor. The power unit may be configured to selectively transfer the rotary output of the motor into the actuator or into the latch assembly (via the respective transmission). Such an arrangement may be beneficial because it enables a single motor to selectively operate both the actuator and the latch assembly.

The actuator transmission may extend across the latch assembly. Such an arrangement may be especially space-efficient. In some embodiments, the latch assembly may comprise a containment structure (for example a sleeve) through which the actuator transmission passes. The containment structure may be arranged to contain, or constrain movement of, the actuator transmission in the unlikely event of flailing shaft failure. In other embodiments, the actuator transmission may comprise a first shaft and a second shaft. The first and second shafts may be rotatably coupled via a coupling. The coupling may form part of the latch assembly. For example the coupling may be within, integral with or attached to a housing of the latch assembly. Having a coupling forming part of the latch assembly has been found to be especially beneficial because it may enable the actuator transmission to extend across the latch assembly in a space-efficient manner.

The portion of the actuator transmission extending between the latch assembly and the actuator (for example the second shaft), may extend in a direction perpendicular to the hinge axis. Such an arrangement may minimise the length of at least this part of the transmission. This may be beneficial because it reduces the potential damage that would be caused in the unlikely event of a flailing shaft failure.

The fixed wing may comprise a front spar and a rear spar, the front spar extending within a front spar plane and the rear spar extending within a rear spar plane. Both the latch assembly and the actuator are preferably located between the front and rear spar planes (for example aft of the front spar plane and fore of the rear spar plane). Such an arrangement may be space efficient because it enables these relatively large components to be located in the most voluminous part of the wing. This may also enable any routing of systems that support the latch assembly and/or actuator, to be achieved without necessarily requiring any penetration of the spars.

The wing, in the flight configuration, may define a wing plane containing the chord of the wing. Both the latch assembly and the actuator may be located at substantially the same height within the wing plane. For example the vertical offset of the latch assembly and the actuator, relative to the wing plane, may be less than 300mm and preferably less than 200m. Such an arrangement may be space efficient because it enables these relatively large components to be located in the most voluminous part of the wing, and it may help mitigate any negative impact on the OML of the wing.

According to another aspect of the invention, there is provided an aircraft wing, comprising: a fixed wing; an outboard wing section outboard of the fixed wing; and a hinge assembly connecting the outboard wing section to the fixed wing, wherein, the aircraft wing is configurable between: a flight configuration for use during flight and a ground configuration for use during ground-based operations, in which ground configuration the outboard wing section is rotated away from the flight configuration about a hinge axis of the hinge assembly, such that the span of the aircraft wing is reduced, wherein, the hinge assembly comprises: a fore set of interleaving lugs and an aft set of interleaving lugs; a fore hinge pin and an aft hinge pin, extending through the fore and aft sets of interleaving lugs respectively, thereby forming a hinge having a hinge axis coaxial to the longitudinal axes of the hinge pins; and an actuator (for example a GRA) sandwiched between the fore sets of lugs and the aft sets of lugs, and positioned coaxially with the hinge axis, the actuator being configured to rotate the outboard wing section about the hinge axis to move the wing between the flight configuration and the ground configuration; wherein the wing further comprises: a plurality of fore latching arms and a plurality of aft latching arms extending inboard from the respective sets of lugs on the outboard wing section; a fore latch receiver and an aft latch receiver extending inboard from the respective lugs on the fixed wing, such that when the wing is in the flight configuration, the fore/aft latch receivers are interleaved with the respective fore/aft latching arms; and a locking and latching unit (LLU), positioned inboard of the actuator and located between the latch receivers of the fixed wing; and wherein the LLU comprises an aft latch pin and a fore latch pin, the latch pins being moveable between retracted positions in which the latch pins are housed in the LLU, and respective extended positions in which the aft latch pin extends rearwardly through aligned holes in the aft latching arms and the aft latch receiver, and the fore latch pin extends forwardly through aligned holes in the fore latching arms and the fore latch receiver, such that when the wing is in the flight configuration and the latch pins are in the extended positions, the outboard wing section is latched to the fixed wing.

The wing may further comprise a power control unit comprising a motor, wherein the power control unit is configured to selectively transfer the rotary output of the motor into the actuator or into the LLU, via the respective transmission. The motor may be located inboard of the LLU and the actuator transmission comprises a first shaft extending from the LLU to the actuator and a second shaft extending from the LLU to the motor, the first and second shafts being rotatably coupled via a coupling, wherein the coupling forms part of the LLU.

According to yet another aspect of the invention, there is provided an aircraft wing, comprising: a fixed wing; an outboard wing section outboard of the fixed wing; and a hinge assembly connecting the outboard wing section to the fixed wing, wherein, the aircraft wing is configurable between: a flight configuration for use during flight and a ground configuration for use during ground-based operations, in which ground configuration the outboard wing section is rotated away from the flight configuration about a hinge axis of the hinge assembly, such that the span of the aircraft wing is reduced, wherein, the hinge assembly comprises: a fore set of interleaving lugs and an aft set of interleaving lugs; a fore hinge pin and an aft hinge pin, extending through the fore and aft sets of interleaving lugs respectively, thereby forming a hinge; and a rotary actuator located between the fore sets of lugs and the aft sets of lugs, the actuator being configured to rotate the outboard wing section about the hinge axis to move the wing between the flight configuration and the ground configuration; wherein the wing further comprises a latch assembly, the latch assembly comprising an aft latch pin, deployable in the aft direction, and a fore latch pin, deployable in a forward direction, the latch assembly being configured such that when the wing is in the flight configuration and the fore and aft latch pins are deployed, the outboard wing section is latched to the fixed wing. The fixed wing has a front spar extending outboard from the root to the tip of the fixed wing, and a rear spar located aft of the front spar and extending outboard along the wing from the root to the tip of the fixed wing, and the latch assembly is located: inboard of the rotary actuator, aft of the front spar, fore of the rear spar, and within the outer mold line of the wing.

In any of the aspects of the invention, it may be that the outboard section of the wing is configured to be extended out to a position in which the wing is in the flight configuration, and is configured to be retracted to a position in which the wing is in the ground configuration and the total length of the wing is reduced. In the flight configuration the trailing edge of the outboard wing section may be a continuation of the trailing edge of the fixed wing. The leading edge of the outboard wing section may be a continuation of the leading edge of the fixed wing, such that there is a smooth transition from the fixed wing to the outboard wing section. It will be appreciated that there may be a smooth transition, even where there are changes in sweep or twist at the fixed wing/ outboard wing section. However, there are preferably no discontinuities at the junction between the fixed wing and outboard wing section.

The outboard wing section may be a wing tip extension, for example a generally planar tip extension. In other embodiments, the outboard wing section may comprise, or consist of, a non-planar device, such as a winglet. The outboard wing section may include, for example, trailing edge moveable devices for control (ailerons) or leading edge devices for stall protection, such as slats or droop nose devices.

When the wing is in the ground configuration (e.g. with the outboard wing section retracted), the aircraft incorporating the wing, may be unsuitable for flight. For example, the outboard wing section may be aerodynamically and/or structurally unsuitable for flight in the ground configuration.

With the push for higher and higher aspect ratio wings, the embodiments of the invention are well suited to use in such wings (i.e. long narrow wings), which typically have confined space in which to mount equipment. The aspect ratio of a wing is defined as the ratio of its span to its mean chord and equal to the square of the span divided by the wing area. The aspect ratio of the wing may be greater than 8, possibly greater than 9, and optionally 10 or higher. In some embodiments it may be that the aspect ratio of the wing is 11 or 12 or more.

The maximum depth of the wing (height between upper and lower wing covers) at the hinge axis may be less than 50cm, and in some embodiments may be less than 35cm. The depth of the wing at the hinge axis may be less than 32.5cm, preferably less than 27.5cm, and optionally less than 22.5cm.

The length of the outboard wing section of the aircraft wing may be more than 3m, preferably more than 4m, and more preferably more than 5m.

The span ratio of the fixed wing relative to the outboard wing section may be such that the fixed wing comprises at least 60%, 70%, 80%, 90%, or more, of the overall span of the wing. The span ratio of the fixed wing relative to the outboard wing section may be such that the outboard wing section comprises at least 10%, 20%, 30%, 40%, or more, of the overall span of the wing.

The hinge axis of the aircraft wing may be more than 12.5m away from the root of the wing, preferably more than 15m away, and optionally more than 17m away.

According to a further aspect of the invention there is also provided an aircraft including the aircraft wing according to any of the other aspects of the invention.

The aircraft may be a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and optionally more than 75 passengers. The aircraft may be a commercial aircraft, for example a commercial passenger aircraft, for example a single aisle or twin aisle aircraft. The aircraft need not be configured for carrying passengers, but could for example be an aircraft of an equivalent size configured for cargo and/or used on a non-commercial basis. The aircraft may have a maximum take-off weight (MTOW) of at least 20 tonnes, optionally at least 40 tonnes, and possibly 50 tonnes or 100 tonnes or more. The aircraft may have an operating empty weight of at least 20 tonnes, optionally at least 30 tonnes, and possibly about 40 tonnes or more.

In the flight configuration, the span of the aircraft may exceed an airport compatibility limit. In the ground configuration the span may be reduced such that the span (with the wing in the ground configuration) is less than, or substantially equal to, the airport compatibility limit. The airport compatibility limit is a span limit (for example relating to clearance restrictions for buildings, signs, other aircraft). The compatibility limit is preferably a gate limit.

It may be that the span of the aircraft in the ground configuration is less than a wing span limit and that the span of the aircraft wing in the flight configuration is greater than the wing span limit. The wing span limit may be 36m. The wing span limit may be 52m. The wing span limit may be 65m. The wing span limit may be 80m. It may be that the span of the aircraft wing is at least 8 metres shorter (possibly 10 metres or more shorter) in the ground configuration than in the flight configuration.

It may be that the outboard wing section undergoes a rotation of more than 45 degrees, preferably more than 60 degrees, and optionally more than 75 degrees as it moves from the ground configuration to the flight configuration. A higher amount of rotation may enable a greater difference in wing span as between the ground configuration and the flight configuration.

The mean chord of the wing may be less than 6.5m, less than 5m, and more preferably less than 4.5m. The chord of the wing at the interface between the fixed wing and the outboard wing section may be less than 5m. For example, for an aircraft having a wing span in the ground configuration of between 65m and 80m, the chord of the wing at the interface between the fixed wing and the outboard wing section may be greater than 3m but less than 5m. For an aircraft having a wing span in the ground configuration of 65m or less, the chord of the wing at the interface between the fixed wing and the outboard wing section may be less than 4m, and may optionally be less than 3m.

According to a further aspect of the invention there is also provided a joint assembly for the aircraft wing herein, the joint assembly comprising: the first structural fitting for fixing to the tip of the fixed wing, the second structural fitting for fixing to the root of the outboard section of wing, the second structural fitting comprising the fore and aft latching arms; the actuator for fitting between the fore and aft sets of interleaving lugs; and the latch assembly..

In the above-mentioned aspects of the invention, the fore and aft latching arms are associated with the outboard wing section, and the latch assembly is located on the fixed wing. Such an arrangement may be beneficial because the latch assembly remains fixed during movement of the outboard wing section, and the latching arms may be rotated with the outboard wing section such that they do not contribute to the wing span once the wing is in the ground configuration. However, in further aspects of the invention, it may be that the location of these features is reversed. In such arrangements the latch assembly may be located outboard of the actuator, in the outboard wing section; the fore and aft latching arms may be associated with the fixed wing. The layout of other features of the invention may also be adjusted accordingly.

It will of course be appreciated that features described in relation to one aspect of the present invention may be incorporated into other aspects of the present invention. For example, an aircraft wing according to one aspect of the invention, may incorporate any of the features described with reference to an aircraft wing according to another aspect of the invention and *vice versa.*

### DESCRIPTION OF THE DRAWINGS

Embodiments of the present invention will now be described by way of example only with reference to the accompanying schematic drawings of which:
Figure 1 shows an aircraft wing comprising a fixed wing and an outboard wing section according to an embodiment of the invention;
Figure 2 shows an aircraft comprising an aircraft wing as shown in Figure 1;
Figures 3a and 3b are isometric views showing the joint between the fixed wing and the outboard wing section of Figure 1;
Figure 4 is a plan view of the portion of the aircraft wing in Figure 3a;
Figure 5 shows the structural fitting of the fixed wing in Figure 4 together with the GRA and the LLU, as viewed from below;
Figure 6 shows the structural fitting of Figure 5 but with the GRA and the LLU removed;
Figure 7 shows the structural fitting of the outboard wing section;
Figure 8 the view in Figure 4 but with additional components such as the PCU also visible;
Figure 9 is a schematic of part of the PCU in Figure 8; and
Figure 10 is a plan view of the portion of an aircraft wing in a second embodiment of the invention.

### DETAILED DESCRIPTION

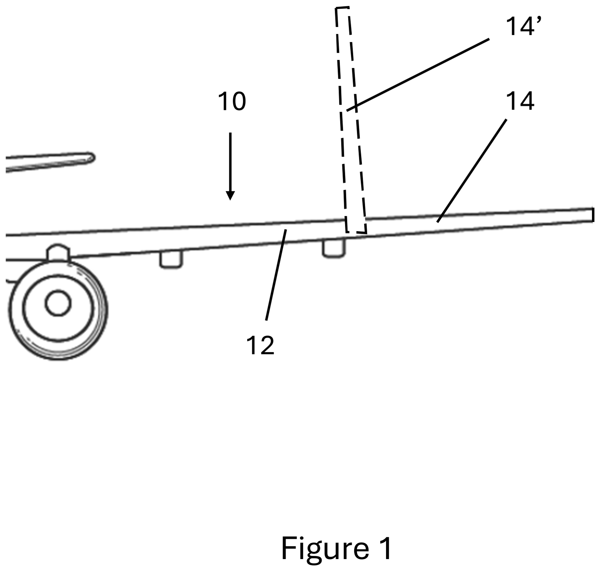

Figure 1 is a schematic image, showing an aircraft wing 10 comprising a fixed wing 12 and an outboard wing section 14, which forms a folding wing tip section. Figure 1 is a composite image and shows the aircraft wing 10 both in a ground configuration (shown in broken line) and in a flight configuration (shown in solid line). It will be seen in the ground configuration the outboard wing section 14' is folded up to be vertical (or near vertical) so that the span of the aircraft wing 10 is reduced compared to the flight configuration. A longer wing may provide the aircraft with an increased lift, better fuel efficiency, reduce the drag, and provide more stability in flight. However, there are size limitations imposed on current airport gates (gate limits), which restrict the wingspan of an aircraft to a certain length. Gate limits may be categorised by reference to an Aerodrome Reference Code letter according to the classification given by ICAO (the International Civil Aviation Organization). Example gate limits are code C (total wing span must be less than 36m), code D (total wing span must be less than 52m), code E (total wing span must be less than 65m), and code F (total wing span must be less than 80m). To overcome this, folding wings may be used, to improve the aspect ratio of the wings during flight, whilst not surpassing the gate limits. In this embodiment, the aircraft has a wing span of about 45m in the flight configuration but with a wing span of just under 36m in the ground configuration (making the aircraft suitable for use in airports having code C compatible gates (which set a limit on maximum wing span of 36m). The outboard wing section 14 is about 5m long to achieve this benefit. The chord of the wing at the interface between the fixed wing 12 and the outboard wing section 14 is about 1.9m and the mean aerodynamic chord (MAC) of the wing is about 4.2m. The maximum depth of the wing 10 (height between upper and lower wing covers) at the junction between the outboard wing section 14 and the fixed wing is about 20cm. The aspect ratio of the wing 10 is about 14.

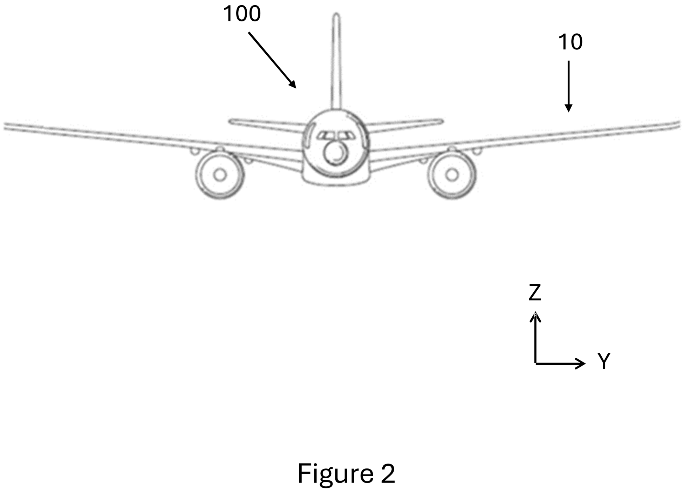

Figure 2 shows the aircraft wing 10 of Figure 1 as part of an aircraft 100. In Figure 2 the aircraft wing 10 is in a flight configuration, where the outboard wing section 14 has been extended from the ground configuration shown in Figure 1 (i.e. rotated to a position in which the outboard wing section 14 forms a continuation of the aerodynamic exterior surface profile of the fixed wing 12). Thus, as shown in Figure 2, the aircraft wing 10 in the flight configuration forms one continuous shape, the outboard wing section 14 extending the general shape of the fixed wing 12.

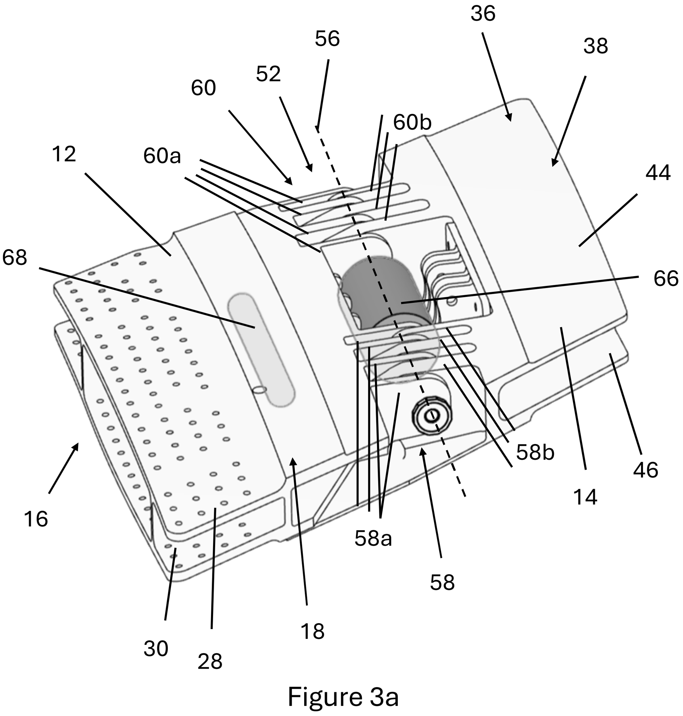

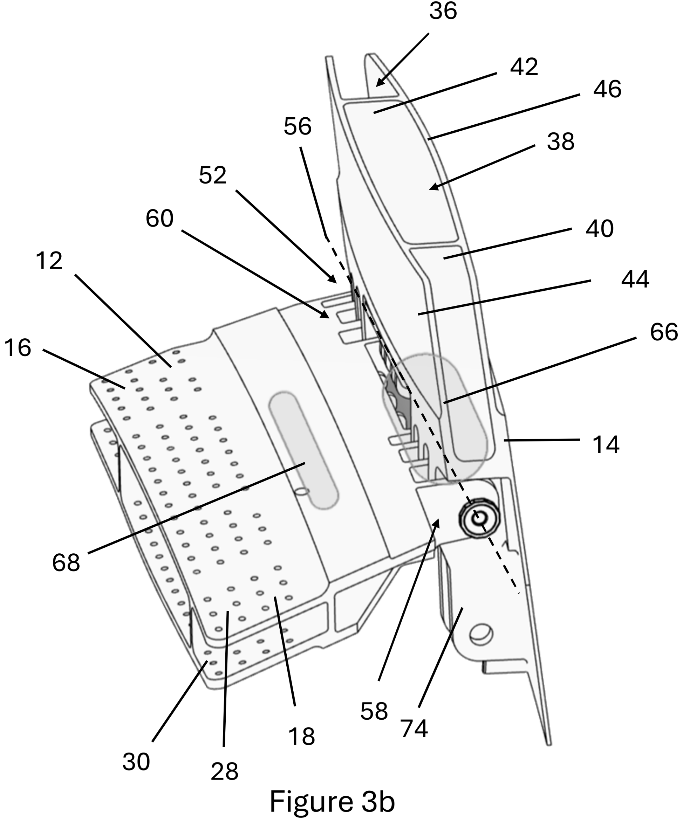

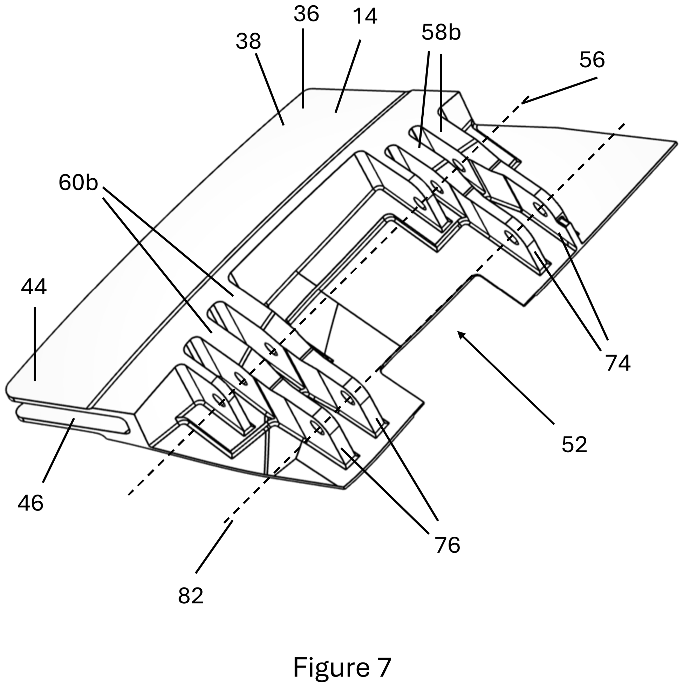

Aircraft having wings with a fixed portion and a foldable outer section are known *per se.* However, the first embodiment of the invention comprises a novel arrangement at the joint between the fixed wing 12 and the outboard wing section 14 as will now be described in more detail with reference to Figures 3 to 9.

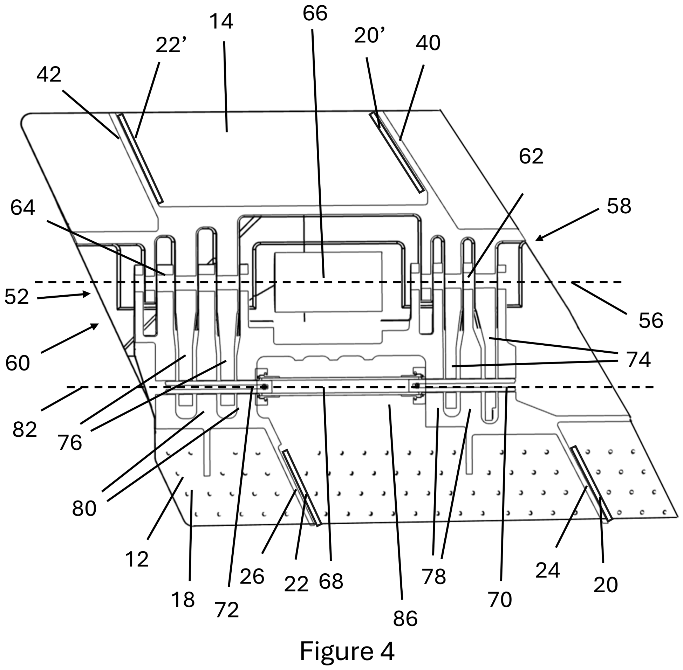

Figures 3a and 3b are isometric views showing the joint between the fixed wing 12 and the outboard wing section 14, when the wing is in the flight configuration (see Figure 3a) and the ground configuration (see Figure 3b). Various components, such as the wing covers, have been omitted for clarity. Figure 4 is a plan view of the arrangement in Figure 3a, as seen from above but canted with the wing dihedral.

Referring first to Figures 3a, 3b and 4, the fixed wing 12 comprises a tip 16 with a first structural fitting 18 connected thereto. The tip 16 of the fixed wing 12 comprises a front spar 20 and a rear spar 22 (the ends of which are shown in Figure 4). The structural fitting 18 connects to the front and rear spars 20, 22 via splined fittings 24, 26 (see Figure 4). The splined fittings 24, 26 are enclosed by upper and lower flanges 28, 30 which are themselves attached to the rib feet of the tip rib (not shown). This attachment is such that the structural fitting 18 is fixedly attached to the tip 16 of the fixed wing 12.

The outboard wing section 14 comprises a root 36 with a second structural fitting 38 connected thereto. The second structural fitting 38 is connected to the root 36 of the outboard wing section 14 in a similar manner to the corresponding structural fitting 18 at the tip of the fixed wing 12, namely: the second structural fitting 38 connects to the front and rear spars 20', 22' of the outboard wing section 14, via splined fittings 40, 42 (see Figure 4). The splined fittings 40, 42, are enclosed by upper and lower flanges 44, 46 which are themselves attached to the rib feet of the root rib (not shown). This attachment is such that the second structural fitting 38 is fixedly attached to the root 36 of the outboard wing section 14.

The fixed wing 12 and the outboard wing section 14 are connected via a hinge assembly 52. The hinge assembly 52 allows rotation of the outboard wing section 14, about a hinge axis 56, between the position shown in Figure 3a (when the wing is in a flight configuration), and the position shown in Figure 3b, when the wing is in the ground configuration.

In the first embodiment, the hinge axis 56 is substantially parallel to the line of flight (and thus substantially parallel to the X-direction, aligned with the longitudinal axis of the fuselage of the aircraft). In the description below, various aspects of the design are described with reference to their location in the wing. The fore-aft direction is along the X axis. The inboard-outboard direction is in the Y-axis, running perpendicular to the X-direction and extending spanwise, perpendicular to the longitudinal axis of the aircraft.

The hinge assembly 52 comprises both a fore set 58 and aft set 60 of interleaving lugs. Hinge pins 62, 64 extend through aligned holes in these fore 58 and aft 60 sets of interleaving lugs respectively, thereby forming a hinge. The holes are bushed to provide a suitable seating for the hinge pins 62, 64 and thus provide a suitable means for enabling maintenance and repair of the hinge assembly 52.

The second structural fitting 38, of the outboard wing section 14, comprises a set of three fore lugs 58b interleaving with a corresponding set of four fore lugs 58a on the first structural fitting 18, of the fixed wing 12 (in some of the Figures only some of the lugs may be labelled for clarity). Similarly, the second structural fitting 38 of the outboard wing section 14 comprises a set of three aft lugs 60b interleaving with a corresponding set of four aft lugs 60a on the first structural fitting 18 of the fixed wing 12. The fore lugs 58a, 58b and aft lugs 60a, 60b of the structural fittings 18, 38 are integrally formed with the respective structural fittings 18, 38.

The fore lugs 58a of the structural fitting 18 of the fixed wing 12 are connected to the fore lugs 58b of the structural fitting 38 of the outboard wing section 14, and the aft lugs 60 of the structural fitting 18 of the fixed wing 12 are connected to the aft lugs 60b of the structural fitting 38 of the outboard wing section 14, for rotation relative to one another via the fore and aft hinge pins 62, 64 which pass through the holes formed in the lugs 58, 60.

The hinge assembly 52 also comprises a geared rotary actuator (GRA) 66. The GRA 66 is located along the hinge axis 56 and is centrally positioned (along the hinge axis 56) between the fore and aft sets of interleaving lugs 58, 60.

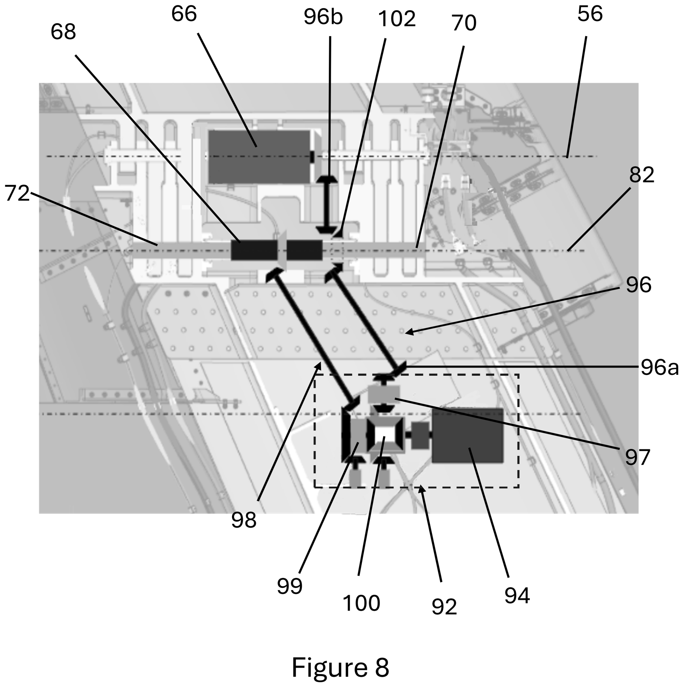

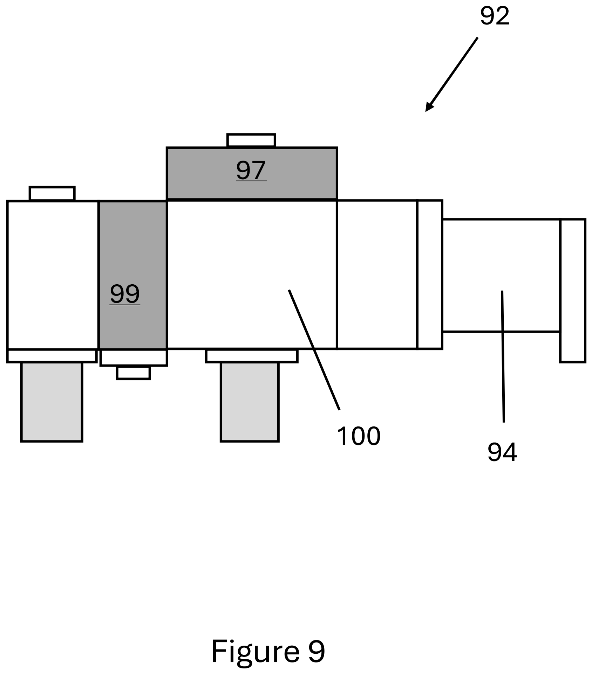

The GRA 66 has a rotary input (described in more detail with reference to Figures 8 and 9) which drives a planetary gearbox within the GRA (not shown). The GRA 66 has a series of stages, alternately connected to either the fixed wing 12 or the outboard wing section 14 (or more specifically, connected to the structural fittings 18, 38 thereof). The rotary input drives rotation of the stages coupled to the outboard wing section 14 thereby rotating the outboard wing section 14 about the hinge axis 56 and towards the ground configuration.

In the first embodiment of the invention, the rotational axis of the GRA 66 is coaxial with the hinge axis 56. This arrangement avoids the need for a clevis, strut, or intermediate bracket between the output of the GRA 66 and the outboard wing section 14, thereby reducing the space required for the folding wing.

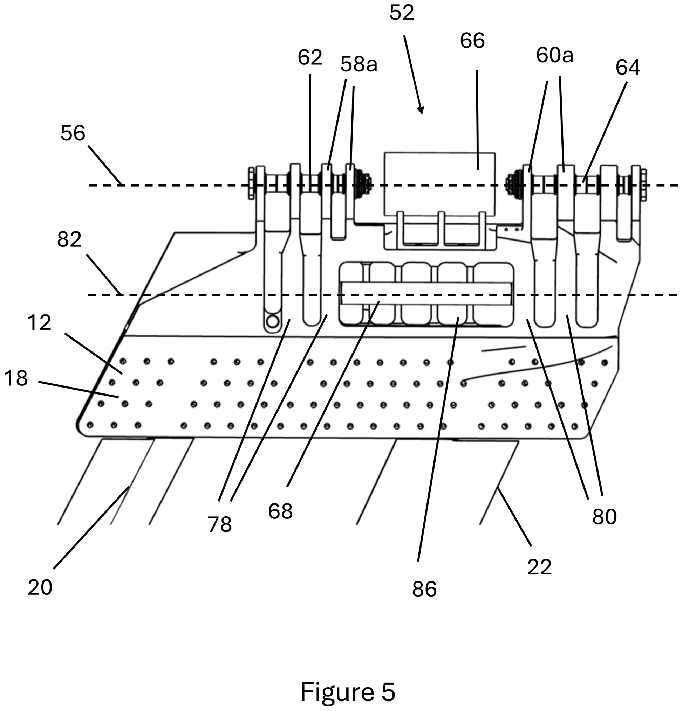

The first embodiment of the invention also comprises a latch assembly 68. The latch assembly 68 is arranged to selectively allow or prevent the movement of the wing between the flight and ground configurations, by retracting or extending a pair of latch pins 70, 72 into latching arms and latch receivers. This will now be described in detail with reference to Figures 3a, 3b and 4, and also Figures 5 to 6.

The outboard wing section 14 comprises a pair of fore latching arms 74 and a pair of aft latching arms 76. Each of the latching arms in the fore and aft pairs 74, 76 are integrally formed as an extension of corresponding fore lugs 58b or aft lugs 60b of the structural fitting 38 of the outboard wing section 14.

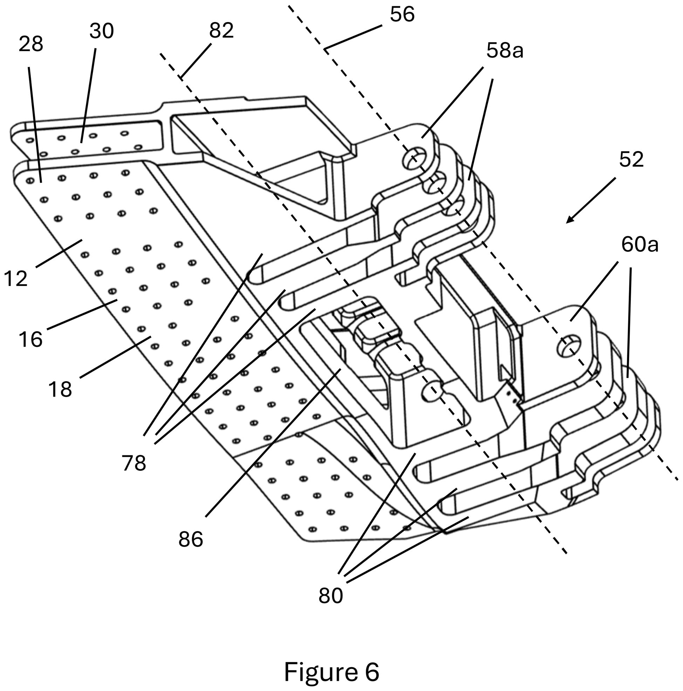

When the wing is in the flight configuration (see Figures 3a and 4), the fore and aft latching arms 74, 76 extend inboard from the hinge axis 56. The arms 74, 76 interleave with a corresponding series of fore and aft latch pin receivers 78, 80. As most clearly visible in Figures 5 and 6, the structural fitting 18 of the fixed wing 12 comprises three fore latch pin receivers 78 and three aft latch pin receivers 80. Each latch pin receiver is integrally formed as an extension of corresponding fore and aft lugs 58a, 60a of the first structural fitting of the fixed wing 12.

When the wing is in the flight configuration (see Figures 3a and 4), each of the latching arms in the pairs of arms 74, 76 are sandwiched between two corresponding latch pin receivers 78, 80. Each of the latching arms 74, 76 and each of the latch pin receivers 78, 80 comprise a hole, all of which align along a common axis 82. The common axis 82 is known as the latch line and extends parallel to, but inboard of, the hinge axis 56. In the first embodiment, the latch line is located 270mm inboard of the hinge axis 56.

The latch assembly 68 is in the form of a cylindrical locking and latching unit (LLU) housed in a recess 86 within the first structural fitting 18 (the recess being most clearly visible in Figure 6). The LLU 68 comprises a fore latch pin 70, deployable in the forward direction, and an aft latch pin 72, deployable in an aft direction. The fore latch pin 70 is moveable between a retracted position and an extended position. In the retracted position (shown in Figure 5) the pin 70 is retracted into a pin housing such that the pin is fully withdrawn aft of the fore pair of latching arms 74 and the fore latch pin receivers 78. In the extended position (see Figure 3a and 4) the pin 70 has been deployed in a forward direction such that it extends through the aligned holes of the fore sets of latching arms 74 and latch pin receivers 78. The aft latch pin 72 is also moveable between a retracted position and an extended position. In the retracted position, the pin 72 is fully withdrawn fore of the aft pair of latching arms 76 and the aft latch pin receivers 80.

The retracted position of the latch pins 70, 72 allows for relative movement between the latching arms 74, 76 and the latch receivers 78, 80. This therefore allows movement of the wing between the flight and ground configurations via actuation of the GRA 66. In contrast, when the pins 70, 72 are in the extended position, the pins inhibit the movement between the latching arms 74, 76 and the respective latch pin receivers 78, 80, thereby latching the wing in the flight configuration and transferring loads across the joint and into the fixed wing structure.

The LLU 68 also comprises a locking assembly. The locking assembly is arranged to lock the latch pins 70, 72 in the extended position to ensure they are unable to retract unintentionally. Latch pin locking assemblies are known *per se,* and are not described in more detail herein.

The GRA 66 and the LLU 68 are both powered from a Power Control Unit 92, as will now be described with reference to Figures 8 and 9. The Power Control Unit (PCU) 92 comprises a hydraulic motor 94. The wing also comprises a GRA transmission 96 and an LLU transmission 98. The PCU 92 is configured to selectively transfer the rotary output of the motor 94 into the GRA 66 or into the LLU 68, via the respective transmission 96, 98. This is achieved by the provision of a differential unit 100 splitting the rotary motor output into two brake-able transmission inputs 97, 99 linked to the GRA transmission 96 and the LLU transmission 98 respectively. By selectively braking one of the transmission inputs, the one or other of the GRA transmission 96 or the LLU transmission 98 may be powered by the motor 94.

The PCU 92 is located inboard of the LLU 68 in a dry bay at the tip 16 of the fixed wing 12. The LLU transmission 98 extends outwardly along the wing to couple to a latching screw mechanism. The latching screw mechanism is not shown in detail, but is arranged to extend/retract the latch pins 70, 72, between the retracted and the extended positions, via rotation of the transmission shaft.

The GRA transmission 96 extends from the motor 94, across the LLU 84, to the GRA 66. This transmission 96 comprises two shafts 96a, 96b coupled by a cross-over device 102. The first shaft 96a extends between the PCU 92 and the housing of the LLU. The housing of the LLU 68 contains the cross-over device 102 in the form of an integrated rotary coupling that couples the first shaft 96a with the second shaft 96b. The second shaft 96b extends from the cross-over device 102 to the GRA 66.

Referring to Figures 4 and 8, the overall layout of the components within the wing will now be described. As described above with reference to Figure 4, the GRA 66 is located along the hinge axis 56 and is sandwiched between the two sets of interleaving lugs 58, 60. The LLU 68 is located inboard of the GRA 66 and is orientated such that the latch pins 70, 72 extend/retract along the latch line 82 orientated parallel to the hinge axis 56. The LLU 84 is located between the latch receivers 78, 80 and the pairs of latching arms 74, 76 (when the wing is in the flight configuration) (i.e. the LLU is aft of the fore latching arms 74/latching receivers 78 and is fore of the aft latching arms 76/latching receivers 80). The motor 94 is inboard of the LLU 68, and the GRA transmission 96 extends, across the LLU 68, to the GRA 66.

Aspects of the arrangement in the first embodiment have been found to provide several potential advantages over known designs. For example, the arrangement may provide some, or all, of the following benefits:

By providing the pair of structural fittings that are fixable to the tip/root of the respective fixed wing and outboard wing section, these relatively complex parts can be provided separately to the conventional wing structures. This may facilitate maintenance and/or assembly of the folding wing joint. By virtue of the structural fitting on the fixed wing having a recess for housing the LLU, the LLU may also be readily housed within the OML of the wing, whilst also being readily accessed for fitting and/or maintenance.

The layout of the components, within an arrangement having a hinge comprising two sets of interleaving lugs, is especially space-efficient. By locating the LLU and the GRA between the front and rear spar planes they are able to be housed in a relatively voluminous part of the wing. Locating the LLU inboard of the GRA also minimises the impact of the LLU on the OML. Providing the sets of lugs, and the latching arms/receivers, fore and aft of the GRA and LLU is also space-efficient. Notably, the LLU is arranged such that the latch pins extend in opposing directions. This allows the LLU to be centrally located without the need for separate latching units in lower volume areas of the wing such as the leading and trailing edges. Each latch pin is also arranged to extend through multiple latching arms and latching receivers. Such an arrangement has been found to be beneficial because it may allow the latching function to be maintained in the unlikely event of a failure (e.g. shear fracture) of a latch pin.

Arranging the latch line significantly inboard of the hinge axis may also be beneficial because it enables the loads reacted into fixed wing to be kept relatively low.

The functionality of the PCU and the layout of the PCU is also beneficial. Allowing selective transfer of the rotary output of the motor into the GRA or into the LLU (via the respective transmission) allows a single motor to achieve both functions, thereby reducing part count and volume of componentry. Providing a coupling as part of the LLU, enables the GRA transmission to extend across the latch assembly in a space-efficient manner (for example, it ensures the GRA transmission can be located relatively centrally within the wing). Arranging the portion of the GRA transmission that extends between the latch assembly and the GRA perpendicular to the hinge axis minimises the length of that transmission. This may be beneficial because it reduces the potential damage that would be caused in the unlikely event of a flailing shaft failure.

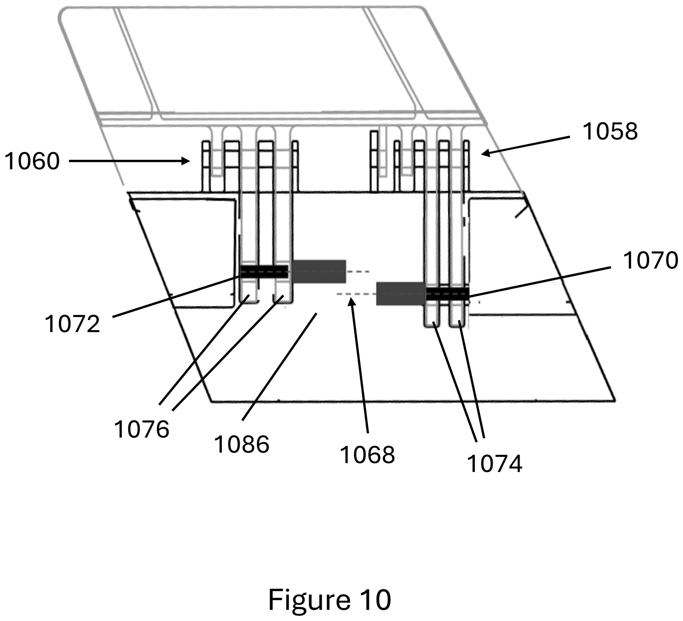

Figure 10 shows part of wing according to a second embodiment of the invention. Figure 10 shows a similar view to Figure 4, but of the arrangement in the second embodiment. The second embodiment is similar to the first embodiment except for the differences described below. Where appropriate, features that are found in both the first and the second embodiments, are described with corresponding reference numerals, but incremented by 1000.

In the second embodiment, the latch pins 1070, 1072 of the LLU 1084 are parallel and extend in the fore and aft directions. However, they are not coaxial. Instead, the fore latch 1070 pin is offset from the aft latch pin 1072 in the inboard-outboard direction. This allows the pins 1070, 1072 to partially overlap in the fore-aft direction, thereby reducing the overall length of the LLU 1068.

Reducing the length of the LLU 1068 (and the corresponding size of the recess in which it is housed) may allow the spacing between the sets of interleaving lugs 1058, 1060 (and/or the spacing between the fore and aft latching arms 1074, 1076) to be reduced. This may allow the arrangement of the second embodiment to be used on wings having a relatively short chord length, relatively long latching arms 1074, 1076, or a combination of both.

Whilst the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. An aircraft wing, comprising:
a fixed wing;
an outboard wing section outboard of the fixed wing; and
a hinge assembly connecting the outboard wing section to the fixed wing, wherein,
the aircraft wing is configurable between:
(i) a flight configuration for use during flight and
(ii) a ground configuration for use during ground-based operations, in which ground configuration the outboard wing section is rotated away from the flight configuration about a hinge axis of the hinge assembly, such that the span of the aircraft wing is reduced,
wherein,
the hinge assembly comprises:
a fore set of interleaving lugs and an aft set of interleaving lugs;
a fore hinge pin and an aft hinge pin, extending through the fore and aft sets of interleaving lugs respectively, thereby forming a hinge; and
a actuator located between the fore set of lugs and the aft set of lugs, the actuator being configured to rotate the outboard wing section about the hinge axis to move the wing between the flight configuration and the ground configuration;
wherein the wing further comprises:
a latch assembly, located in the fixed wing and inboard of the actuator;
a fore latching arm associated with the outboard wing section; and
an aft latching arm associated with the outboard wing section, the latch assembly and the fore and aft latching arms being configured such that when the wing is in the flight configuration, the fore latching arm extends fore of the latch assembly and the aft latching arm extends aft of the latch assembly such that the latch assembly is between the latching arms,
and wherein
the latch assembly comprises an aft latch pin, deployable in the aft direction to latch the aft latching arm, and a fore latch pin, deployable in a forward direction, to latch the fore latching arm,
such that when the wing is in the flight configuration and the fore and aft latch pins are deployed, the outboard wing section is latched to the fixed wing.

2. An aircraft wing according to claim 1, wherein the fixed wing comprises a plurality of fore latch pin receivers and a plurality of aft latch pin receivers, the latch pin receivers being arranged such that when the wing is in the flight configuration the fore latch pin receiver is adjacent the fore latching arm, and the aft latch pin receiver is adjacent the aft latching arm,
such that the aft latch pin may be deployed through both the aft latching arm and aft latch receiver, and the fore latch pin may be deployed through both the fore latching arm and fore latch receiver.

3. An aircraft wing according to claim 1 or claim 2, wherein
the fixed wing comprises a fore set of lugs and an aft set of lugs, through which the hinge axis extends;
and the outboard wing section comprises a fore set of lugs interleaving with the fore set of lugs of the fixed wing to form the fore set of interleaving lugs, and an aft set of lugs interleaving with the aft set of lugs of the fixed wing to form the aft set of interleaving lugs,
wherein the aft latching arm is an extension of one of the lugs in the aft set of lugs of the outboard wing section, and the fore latching arm is an extension of one of the lugs in the fore set of lugs of the outboard wing section.

4. An aircraft wing according to claim 3 when dependent on claim 2, wherein the aft latch pin receiver is an extension of the aft set of lugs on the fixed wing, and the fore latch pin receiver is an extension of the fore set of lugs on the fixed wing.

5. An aircraft wing according to claim 3 or claim 4, wherein the fixed wing comprises a tip with a first structural fitting fixedly connected thereto, and the outboard wing section comprises a root with a second structural fitting connected thereto,
the first structural fitting comprising the fore and aft sets of lugs of the fixed wing, and the second structural fitting comprising the fore and aft sets of lugs of the outboard wing section.

6. An aircraft wing according to claim 5, wherein the first structural fitting comprises a recess configured to receive the latch assembly, and wherein the actuator is attached between the first structural fitting and the second structural fitting such that rotation of the actuator rotates the second structural fitting, relative to the first structural fitting.

7. An aircraft wing according to any preceding claim, wherein the actuator is a Geared Rotary Actuator (GRA) and wherein the wing comprises a motor configured to drive the GRA, wherein
the motor is located remotely from, and more preferably inboard of, the GRA and the motor is coupled to the GRA via a GRA transmission, to transfer a rotary output of the motor into the GRA.

8. An aircraft wing according to claim 7, wherein the motor is located inboard of the latch assembly and the GRA transmission extends across the latch assembly and wherein the GRA transmission comprises a first shaft and a second shaft, the first and second shafts being rotatably coupled via a coupling, wherein the coupling forms part of the latch assembly.

9. An aircraft wing according to any of claims 7 or 8, wherein the portion of the GRA transmission extending between the latch assembly and the GRA extends in a direction substantially perpendicular to the hinge axis.

10. An aircraft wing according to any of claim 7 to 9, wherein the motor is also coupled to the latch assembly, via a latch assembly transmission, to transfer a rotary output of the motor into the latch assembly, and wherein aircraft wing comprises a power control unit comprising the motor, the power unit being configured to selectively transfer the rotary output of the motor into the GRA or into the latch assembly, via the respective transmission.

11. An aircraft wing according to any preceding claim wherein the fixed wing comprises a front spar and a rear spar, the front spar extending within a front spar plane and the rear spar extending within a rear spar plane,
wherein both the latch assembly and the actuator are located aft of the front spar plane and fore of the rear spar plane.

12. An aircraft wing according to any preceding claim, wherein the wing, in the flight configuration, defines a wing plane containing the chord of the wing,
wherein both the latch assembly and the actuator are located at substantially the same height within the wing plane.

13. An aircraft wing, comprising:
a fixed wing;
an outboard wing section outboard of the fixed wing; and
a hinge assembly connecting the outboard wing section to the fixed wing, wherein,
the aircraft wing is configurable between:
(i) a flight configuration for use during flight and
(ii) a ground configuration for use during ground-based operations, in which ground configuration the outboard wing section is rotated away from the flight configuration about a hinge axis of the hinge assembly, such that the span of the aircraft wing is reduced,
wherein,
the hinge assembly comprises:
a fore set of interleaving lugs and an aft set of interleaving lugs;
a fore hinge pin and an aft hinge pin, extending through the fore and aft sets of interleaving lugs respectively, thereby forming a hinge having a hinge axis coaxial to the longitudinal axes of the hinge pins; and
an actuator sandwiched between the fore sets of lugs and the aft sets of lugs, and positioned coaxially with the hinge axis, the actuator being configured to rotate the outboard wing section about the hinge axis to move the wing between the flight configuration and the ground configuration;
wherein the wing further comprises:
a plurality of fore latching arms and a plurality of aft latching arms extending inboard from the respective sets of lugs on the outboard wing section;
a fore latch receiver and an aft latch receiver extending inboard from the respective lugs on the fixed wing, such that when the wing is in the flight configuration, the fore/aft latch receivers are interleaved with the respective fore/aft latching arms; and
a locking and latching unit (LLU), positioned inboard of the actuator and located between the latch receivers of the fixed wing;
and wherein
the LLU comprises an aft latch pin and a fore latch pin, the latch pins being moveable between retracted positions in which the latch pins are housed in the LLU, and respective extended positions in which the aft latch pin extends rearwardly through aligned holes in the aft latching arms and the aft latch receiver, and the fore latch pin extends forwardly through aligned holes in the fore latching arms and the fore latch receiver,
such that when the wing is in the flight configuration and the latch pins are in the extended positions, the outboard wing section is latched to the fixed wing.

14. An aircraft wing according to claim 13, wherein the wing further comprises a power control unit comprising a motor, and the wing comprises an actuator transmission for transferring rotary output of the motor to the actuator , and an LLU transmission for transferring rotary output of the motor to the LLU,
wherein
the power unit is configured to selectively transfer the rotary output of the motor into the actuator or into the LLU, via the respective transmission,
and wherein
the motor is located inboard of the LLU and the actuator transmission comprises a first shaft extending from the LLU to the actuator and a second shaft extending from the LLU to the motor, the first and second shafts being rotatably coupled via a coupling, wherein the coupling forms part of the LLU.

15. An aircraft wing, comprising:
a fixed wing;
an outboard wing section outboard of the fixed wing; and
a hinge assembly connecting the outboard wing section to the fixed wing, wherein,
the aircraft wing is configurable between:
(i) a flight configuration for use during flight and
(ii) a ground configuration for use during ground-based operations, in which ground configuration the outboard wing section is rotated away from the flight configuration about a hinge axis of the hinge assembly, such that the span of the aircraft wing is reduced,
wherein,
the hinge assembly comprises:
a fore set of interleaving lugs and an aft set of interleaving lugs;
a fore hinge pin and an aft hinge pin, extending through the fore and aft sets of interleaving lugs respectively, thereby forming a hinge; and
a rotary actuator located between the fore sets of lugs and the aft sets of lugs, the actuator being configured to rotate the outboard wing section about the hinge axis to move the wing between the flight configuration and the ground configuration;
wherein the wing further comprises a latch assembly, the latch assembly comprising an aft latch pin, deployable in the aft direction, and a fore latch pin, deployable in a forward direction, the latch assembly being configured such that when the wing is in the flight configuration and the fore and aft latch pins are deployed, the outboard wing section is latched to the fixed wing,
wherein,
the fixed wing has a front spar extending outboard from the root to the tip of the fixed wing, and a rear spar located aft of the front spar and extending outboard along the wing from the root to the tip of the fixed wing, and the latch assembly is located:
inboard of the rotary actuator,
aft of the front spar,
fore of the rear spar, and
within the outer mold line of the wing.
